(19) **Europäisches Patentamt / European Patent Office / Office européen des brevets**

(11) **EP 2 490 370 B1**

(12) **EUROPEAN PATENT SPECIFICATION**

(45) Date of publication and mention
of the grant of the patent:
**18.05.2016 Bulletin 2016/20**

(21) Application number: **10823595.3**

(22) Date of filing: **12.10.2010**

(51) Int Cl.:
*H04L 12/22* (2006.01)  *H04W 12/08* (2009.01)
*H04W 4/02* (2009.01)  *H04W 64/00* (2009.01)
*G06F 21/56* (2013.01)  *H04L 29/08* (2006.01)
*H04L 29/06* (2006.01)

(86) International application number:
**PCT/KR2010/006988**

(87) International publication number:
**WO 2011/046356 (21.04.2011 Gazette 2011/16)**

(54) **METHOD FOR PROVIDING AN ANTI-MALWARE SERVICE**

VERFAHREN ZUR BEREITSTELLUNG EINES ANTI-MALWARE-DIENSTES

PROCÉDÉ DE FOURNITURE D'UN SERVICE ANTI-PROGRAMME MALVEILLANT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.10.2009 KR 20090096661
28.10.2009 KR 20090102566**

(43) Date of publication of application:
**22.08.2012 Bulletin 2012/34**

(73) Proprietor: **Samsung S.D.S Co., Ltd.
Seoul 135-082 (KR)**

(72) Inventor: **YOO, Inseon
Seoul 139-231 (KR)**

(74) Representative: **Grünecker Patent- und
Rechtsanwälte
PartG mbB
Leopoldstraße 4
80802 München (DE)**

(56) References cited:
**EP-A2- 1 443 379     WO-A1-2007/062673
KR-A- 20080 069 852     KR-A- 20080 074 271
US-A1- 2009 005 077**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### CROSS-REFERENCE TO RELATED APPLICATIONS

This application is a National Stage of international Application No. PCT/KR2010/006988, filed October 12, 2010, and claims priority from Korean Patent Application Nos. 2009-0096661 and 2009-0102566 filed on October 12, 2009 and October 28, 2009, respectively, in the Korean Intellectual Property Office.

### FIELD OF THE INVENTION

Systems and methods consistent with the present invention relate to a method and a system for providing an anti-malware service based on a server, and a server and a device applying the same.

### BACKGROUND OF THE INVENTION

Malware is a word coming from software that is designed specifically to damage or disrupt a system, such as a virus and Trojan horse, a code and malicious software that may expose data, a computer, and a network to danger, or a malicious code, and refers to software that is developed to damage other systems. Recently developed malware may make undesirable software installed and may hijack a system just by clicking on a link or an image of a famous web page, even if a user does not open attachments or download and install software, so much care is required.

Awareness of a mobile virus in a wireless communication system and damage therefrom are not an issue because an operating system (OS) and a file system are less biased in comparison with a computer and importance of used data is relatively low.

However, wireless terminals have introduced many functions of the computer and have been developed in the form of smart phones, and the wireless network of the wireless terminals have been extended, rivaling the wireless Internet. Therefore, it is highly likely that the damage from viruses in the computer appears in the wireless network of the wireless terminals.

In order to update a malware database (hereinafter, referred to as a 'DB') in a related-art method, a mobile device should download the entire malware DB from a server. Accordingly, since a huge amount of data traffic is exchanged between the server and the mobile device in the related art, waste of communication resources is caused and there is a problem in using a mobile application due to limited resources of the mobile device. Also, with the globalized mobile communication environment and increasing use of a roaming service, a related-art anti-malware system has difficulty in dealing with malware generated from each region effectively.

## SUMMARY

An exemplary embodiment of the present invention provides a method and a system for providing an anti-malware service based on a server, which permit minimum data traffic to be exchanged when updating a malware DB in a device, so as to prevent waste of communication resources, and permit the device to effectively use limited resources, and a server and a device applying the same.

An exemplary embodiment of the present invention also provides a method and a system for providing an anti-malware service based on a server, which can effectively deal with malware generated from regions in the world, and a server and a device applying the same.

According to an aspect of the present invention, there is provided a method for providing an anti-malware service based on a server, the method including: managing, by at least one server, local malware information associated with a predetermined region, if a device is located in the region, generating, by the server, malware component information for the device based on the local malware information, and transmitting, by the server, the malware component information to the device.

According to an aspect of the present invention, there is provided an anti-malware service system based on a server, the anti-malware service system including: a server which manages local malware information associated with a predetermined region; and a device which transmits information identifying a location of the device to the server, wherein the server determines whether the device is located in the predetermined region based on the information received from the device, and, if the device is located in the predetermined region, generates malware component information based on the local malware information and transmits the malware component information to the device.

According to an aspect of the present invention, there is provided a device, including: a storage unit which stores a malware signature DB; an anti-malware engine; and a management module which requests malware component information associated with a region where the device is located from a server, wherein the management module receives the malware component information from the server, and updates at least one of the malware signature DB and the anti-malware engine using the malware component information.

According to an aspect of the present invention, there is provided a server which provides an anti-malware service, including: a database server which stores local malware information associated with a predetermined region; and an update server which, if malware component information is requested by a device, determines a location of the device, and, if the location of the device is in the predetermined region, generates the malware component information based on the local malware information and transmits the malware component information to the device.

The local malware information may include at least one of a local anti-malware engine associated with the predetermined region and a local malware signature DB associated with the predetermined region.

The malware component information may be information for updating malware information pre-stored in the device with the local malware information.

The server may generate a block data DB by extracting blocks from the local malware signature DB according to a predetermined criterion, and a block ID may be assigned to each of the blocks of the block data DB.

If two blocks have a same block ID, the server may assign versions to the block ID and manage the versions, and may generate a delta data DB including a difference between the blocks having the same block ID.

The device may include a location decider, and may transmit at least one piece of information from among a checksum of a malware signature DB stored in the device, an execution environment of the device, a location ID, a version ID, and a number of blocks to the server, and the server which has received the information may determine whether to transmit a new location decider to the device based on whether there is change in the information.

The server may check whether the device has a block or not, and, if the device does not have a block, the server may generate the malware component information so that the block data DB is included in the malware component information.

The server may pre-store a location decider corresponding to an execution environment of the device.

The device may transmit at least one piece of information from among a checksum of a malware signature DB, an execution environment of the device, a location ID, a version ID, and a number of blocks to the server, and the server may check the information and determine whether to update the malware signature DB.

The location decider may activate a malware signature DB associated with a region where the device is currently located from among the malware signature DB stored in the storage unit.

The management module may transmit at least one piece of information from among a checksum of the malware signature DB, an execution environment of the device, a location ID, a version ID, and a number of blocks, when requesting the malware component information from the server.

The malware signature DB may be a block data DB in which data is classified on a block basis according to a predetermined criterion, and a block ID may be assigned to each of blocks of the block data DB.

If the device receives a new location decider from the server, the management module may replace the existing location decider with the received location decider.

According to an exemplary embodiment, the device permits minimum data traffic to be transceived when updating the malware DB so as to prevent waste of communication resources, and effectively uses limited resource.

According to an exemplary embodiment, the device effectively deals with malware generated from regions of the world.

## BRIEF DESCRIPTION OF THE DRAWINGS

The above and/or other aspects of the invention will become and more readily appreciated from the following description of the exemplary embodiments, taken in conjunction with the accompanying drawings of which:

FIG. 1 is a function block diagram illustrating an anti-malware service system based on a server according to an exemplary embodiment;

FIG 2 is a function block diagram illustrating a mobile device according to an exemplary embodiment;

FIG. 3 is a function block diagram illustrating a server according to an exemplary embodiment;

FIG 4 is a function block diagram illustrating a mobile device according to an exemplary embodiment;

FIG. 5 is a view to explain a pattern data DB according to an exemplary embodiment;

FIG. 6 is a view to explain a block data DB according to an exemplary embodiment;

FIG 7 is a view to explain a malware signature DB according to an exemplary embodiment;

FIG 8 is a view to explain a delta data DB according to an exemplary embodiment;

FIG 9 is a view to explain a block data DB and a delta DB according to an exemplary embodiment; and

FIGS. 10 to 14 are views to explain a method for providing an anti-malware service based on a server according to an exemplary embodiment.

## DETAILED DESCRIPTION OF EXEMPLARY EMBODIMENTS OF THE INVENTION

Hereinafter, exemplary embodiments will be described in greater detail with reference to the accompanying drawings. The matters defined in the description, such as detailed construction and elements, are provided to assist in a comprehensive understanding of the exemplary embodiments. However, it is apparent that the exemplary embodiments can be carried out by those of ordinary skill in the art without those specifically defined matters. In the description of the exemplary embodiment, certain detailed explanations of related art are omitted when it is deemed that they may unnecessarily obscure the essence of the inventive concept.

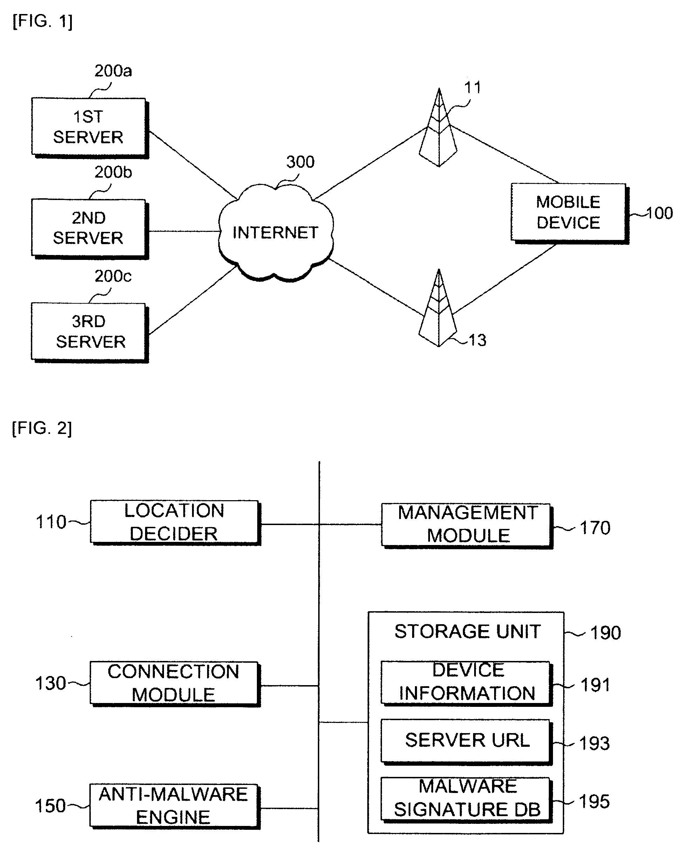

FIG 1 is a function block diagram illustrating an anti-malware service system based on a server according to an exemplary embodiment.

Referring to FIG. 1, an anti-malware service system based on a server according an exemplary embodiment includes a first server 200a, a second server 200b, a third server 200c, a mobile device 100, and the Internet.

The first server 200a, the second server 200b, and the third server 200c may provide an anti-malware service to the mobile device 100 through the Internet. The servers may be cloud servers, for example. However, the present invention is not limited to the cloud server.

The mobile device 100 is able to communicate with the first through the third servers in a wired and/or wireless manner, and receives the anti-malware service. In the present exemplary embodiment, the mobile device 100 may be a notebook computer, a smart phone, an iPad, a personal digital assistant (PDA) or a smart grid in a cellular phone smart grid, for example.

The first server 200a controls a predetermined region and manages malware information (hereinafter, referred to as 'local malware information') associated with its own control region (hereinafter, referred to as a 'control region'). 'Managing' recited herein may include storing, deleting, replacing, adding, and/or correcting. For example, the first server 200a may control the U.S. and may manage local malware information generated in the U.S.

The local malware information may include, for example, i) a local anti-malware engine which scans and/or filters malware generated specifically in the U.S., and/or ii) a local malware signature DB generated specifically in the U.S.

In the present specification, the local malware information is used as a concept including an anti-malware engine that can scan and/or filter malware generated specifically in a specific region, and a signature DB of malware generated specifically in a specific region, as described above. However, the local malware information may further include a signature DB or an anti-malware engine regarding malware that is commonly generated regardless of region.

The second server 200b and the third server 200c have their respective control regions like the first server 200a, and manage local malware information that is generated in each control region. For example, the second server 200b and the third server 200c may control Korea and Europe, respectively. The present invention is not limited to the above-mentioned countries. Since the first server 200a to the third server 200c are the same in their functions, the first server 200a will be described mainly hereinafter.

If an anti-malware service based on a server is requested by the mobile device 100, the first server 200a may transmit local malware information associated with a region where the mobile device 100 is located. For example, the request for the anti-malware service includes replacing or updating an anti-malware engine stored by the mobile device 100, correcting, replacing, deleting, or adding a malware signature DB, or correcting, replacing, deleting, or adding a malware signature block data DB, and includes all requests necessary for receiving an anti-malware service based on a server. In the present specification, from among the requests for the anti-malware service, a request for replacing or updating an anti-malware engine, correcting, replacing, deleting, or adding a malware signature DB, or correcting, replacing, deleting, or adding a malware signature block data DB will be referred to as 'a request for malware component information'.

The first server 200 may store at least one location decider corresponding to an execution environment of a device. For example, the first server 200a may store a location decider corresponding to an operating system (OS) such as Symbian, BlackBerry, iPhone, a window mobile, or Android.

The first server 200a may transmit the location decider corresponding to the execution environment of the device to the mobile device 100 which is located in its own control region. If a location decider 110 of the mobile device 100 is not appropriate for an execution environment (for example, an OS) of the mobile device 100, the first server 200a transmits its own location decider to the mobile device 100. The mobile device 100 updates the location decider stored therein with the location decider received from the first server 200a. According to an exemplary embodiment, the updated location decider 110 may store a uniform resource locator (URL) of the first server 200a in the mobile device 100.

According to an exemplary embodiment, the device 100 transmits at least one piece of information from among a checksum of a malware signature DB stored in the device 100, an execution environment of the device, a location ID, a version ID, and a number of blocks to the first server 200a. The first server 200a which has received the above information determines whether to transmit a new location decider to the device according to whether there is change in the information.

According to an exemplary embodiment, the first server 200a determines whether to update the location decider of the mobile device 100 or not by checking device information (for example, an OS) transmitted from the mobile device 100.

According to an exemplary embodiment, an URL of a predetermined server may be stored in the mobile device 100 when the mobile device 100 subscribes the anti-malware service according to an exemplary embodiment or when the mobile device 100 is manufactured. If the mobile device 100 is located in the U.S. when subscribing to the anti-malware service, an URL of the first server 200a (hereinafter, referred to as a 'first URL') may be stored in the mobile device 100. Accordingly, the mobile device 100 requests the anti-malware service from a server having the first URL (that is, the first server). If the mobile device 100 is moved to Korea, the mobile device 100 requests the anti-malware service from the first server 200a which controls the U.S., since the mobile device 100 still has the first URL.

The first server 200a knows that the mobile device 100 which has requested the service is located in Korea, not in the U.S., and accordingly, transmits a URL of the second server 200b (hereinafter, referred to as a 'second URL') which controls Korea to the mobile device 100. The mobile device 100 stores the second URL instead of the pre-stored first URL, and requests the anti-malware service from a server having the second URL afterward. For example, the mobile device 100 transmits information such as a checksum of a malware signature DB of the mobile device 100, an execution environment of the mobile device 100, a location ID, a version ID, and/or a number of blocks to the second server 200b having the second URL. The second server 200b determines whether the mobile device 100 has a location decider appropriate for the execution environment of the mobile device 100, and, if it is determined that the mobile device 100 has a location decider inappropriate for the execution environment, transmits a new location decider to the mobile device 100. On the other hand, if it is determined that it is unnecessary to transmit a new location decider, the second server 200b determines whether it is necessary to update a signature DB of the mobile device 100 or not using at least one piece of information from among the information transmitted from the mobile device 100. For example, if the checksum of the signature DB of the mobile device 100 is not consistent with a checksum of a local malware signature DB associated with Korea, the second server 200b performs an operation to update the malware signature DB of the mobile device I 00.

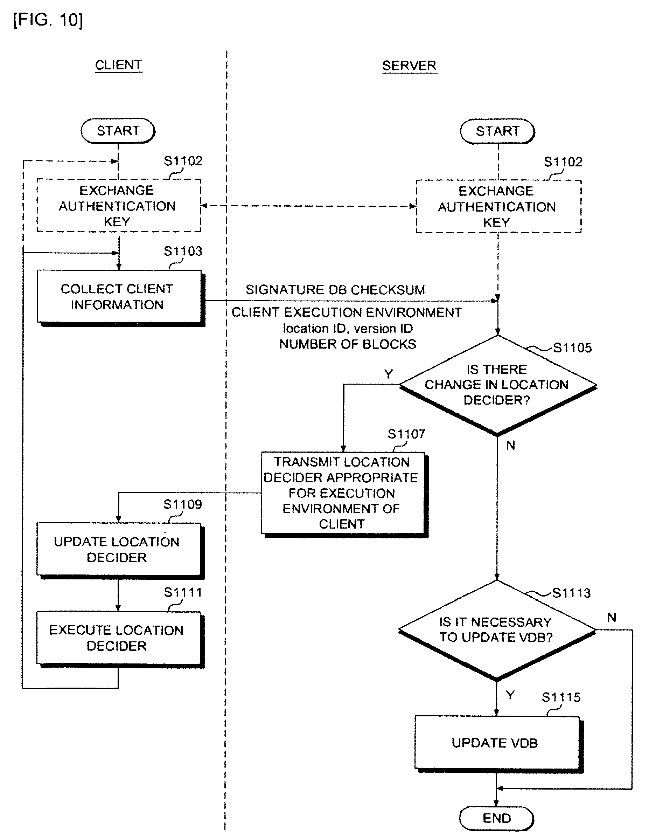

Updating the malware signature DB will be explained in detail below with reference to FIGS. 10 to 14.

Although the above-described embodiment is applied to the mobile device, the present invention may be applied to a fixed device such as a desktop PC, besides the mobile device.

FIG 2 is a function block diagram illustrating a mobile device according to an exemplary embodiment.

Referring to FIG. 2, a mobile device according to an exemplary embodiment includes a location decider 110, a connection module 130, an anti-malware engine 150, a management module 170, and a storage unit 190.

The location decider 110 is an object that has logic to determine an activated location and may include a checksum of a malware signature DB, a client execution environment, a location ID, a version ID, and a number of blocks as variables. According to an exemplary embodiment, the location decider 110 may activate a malware signature DB associated with a region where the mobile device is currently located, and may inactivate at least some of a malware signature DB unrelated to the region where the mobile device is currently located.

For example, if the mobile device is moved to the U.S. from Korea, the mobile device receives a local malware signature DB associated with the U.S. from a server (for example, the first server) which controls the U.S. In this case, the location decider 110 may delete or inactivate at least some of a pre-stored local malware signature DB associated with Korea.

According to another exemplary embodiment, if the location decider 110 is updated, the location decider 110 may store an URL of a new server which is updated in the mobile device.

The anti-malware engine 150 compares a file to be scanned and a malware signature DB 195 stored in the storage unit 190 and determines whether malware is included in the file to be scanned.

The management module 170 may manage device information 191, a server URL 193, and the malware signature DB 195 which are stored in the storage unit 190, and may synchronize the location decider 110, the anti-malware engine 150, and/or the malware signature DB 195.

The management module 170 may request an anti-malware service from the server 200a periodically or aperiodically. For example, the management module 170 may collect information of the mobile device (a malware signature checksum, a client execution environment, a location ID, a version ID, a number of blocks) and transmit the information to the server. Also, the management module 170 may transmit information on a block ID of the mobile device, a version of the block ID, and a block checksum by request of the server.

For example, the management module 170 may request the anti-malware service from the server URL 193 and may process information that is requested by the server.

The connection module 130 may support communication with the servers 200a, 200b, and 200c. For example, the connection module 130 may support all communication with the first server 200a to the third server 200c described above.

Although the storage unit 190 in the exemplary embodiment of FIG 2 stores the malware signature DB 195, the storage unit 190 may also store a block data DB, which will be described later. The block data DB consists of blocks into which the malware signature DB is divided by a predetermined criterion, and a block ID is assigned to each of the blocks included in the block data DB. If the same block ID is assigned to single block data, a version of the block ID is assigned. The criterion to classify the blocks may be a date when a virus pattern is generated. However, the present invention is not limited to this criterion.

According to an exemplary embodiment, the management module 170 may update the malware signature DB 195 on a block basis.

For example, if the mobile device 100 is located in the U.S. when subscribing to the anti-malware service, the storage unit 190 may store a URL (first URL) of the first server 200a. Accordingly, the management module 170 requests the anti-malware service from a server having the first URL (that is, the first server). If the mobile device 100 is moved to Korea, the management module 170 requests the anti-malware service from the first server 200a which controls the U.S., since the mobile device 100 still has the first URL.

The first server 200a knows that the mobile device 100 which has requested the service is located in Korea, not in the U.S. A location decision module 211 of the first server 200a may determine where the mobile device 100 is located, and may determine the location of the mobile device 100 in various ways. For example, a roaming record may be referred to. The location decision module 211 may determine the location of the mobile device 100 using well-known related-art methods other than referring to the roaming record.

An update management module 213 of the first server 200a may transmit an URL of the server which controls Korea, that is, the second server 200b, to the mobile device 100. The storage unit 190 stores the second URL instead of the pre-stored first URL, and the management module 170 requests the anti-malware service from a server having the second URL afterward. For example, the management module 170 collects information such as a checksum of a malware signature DB of the mobile device 100, an execution environment of the mobile device 100, a location ID, a version ID, and/or a number of blocks and transmits the collected information to the second server 200b having the second URL. An update management module 213 of the second server 200b determines whether the mobile device 100 has a location decider appropriate for the execution environment of the mobile device. If it is determined that the mobile device 100 has a location decider inappropriate for the execution environment, the update management module of the server transmits a new location decider appropriate for the execution environment to the mobile device 100. On the other hand, if it is determined that it is not necessary to transmit a new location decider, the update management module of the second server 200b determines whether it is necessary to update a signature DB of the mobile device 100 or not using at least one piece of information from among the information transmitted from the mobile device 100.

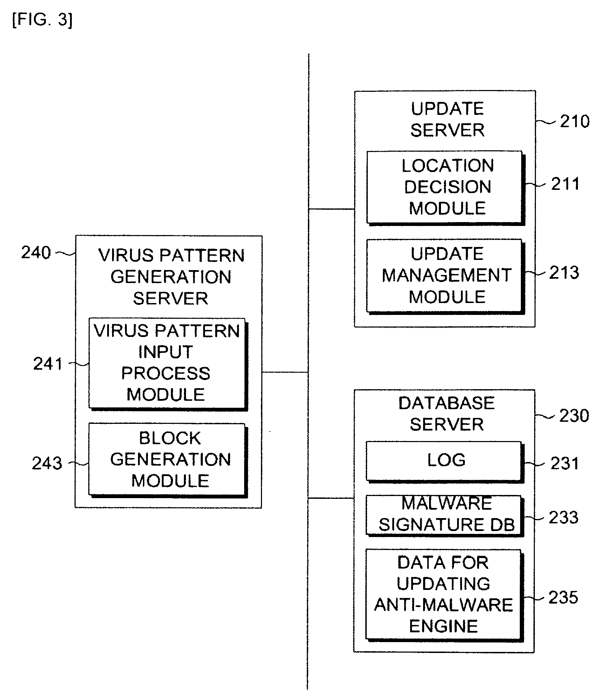

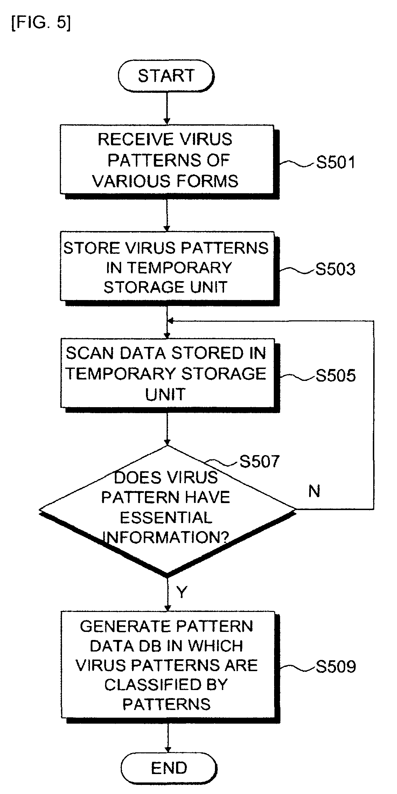

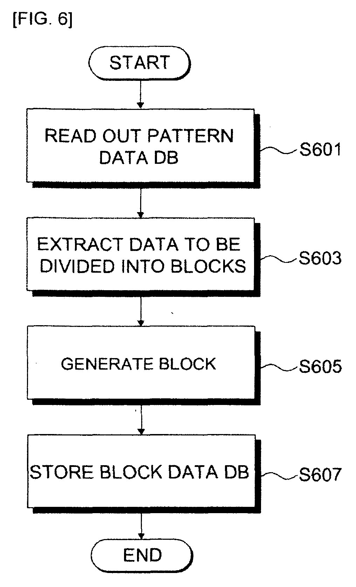

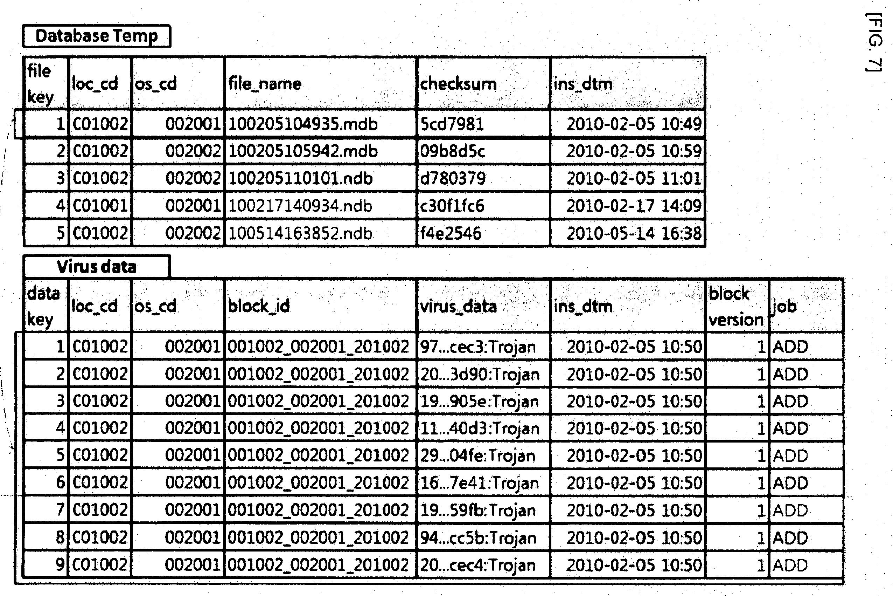

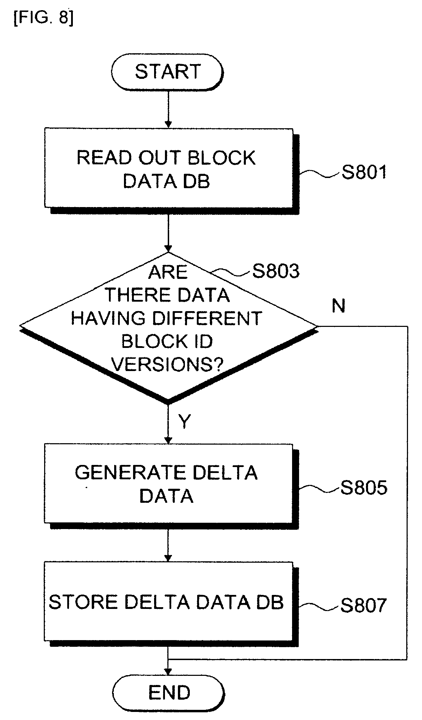

FIG 3 is a function block diagram illustrating a server according to an exemplary embodiment, FIG 5 is a view to explain a pattern data DB according to an exemplary embodiment, FIG 6 is a view to explain a block data DB according to an exemplary embodiment, FIG 7 is a view to explain a malware signature DB according to an exemplary embodiment, and FIG. 8 is a view to explain a delta data DB according to an exemplary embodiment.

Referring to FIG. 3, a server according to an exemplary embodiment includes a virus pattern generation server 240, an update server 210, and a database server 230.

The virus pattern generation server 240 includes a virus pattern input process module 241 and a block generation module 243, the update server 210 includes a location decision module 211 and an update management module 213, and the database server 230 may manage a log, a malware signature DB 195, and data for updating the anti-malware engine 150.

The virus pattern generation server 240 generates a malware signature DB and a block data DB. The database server 230 may update a pre-stored malware signature DB using the malware signature DB and the block data DB generated by the virus pattern generation server 210.

The database server 230 stores a current update status of a mobile device as a log, and stores the malware signature DB and data for updating the anti-malware engine. The database server (DB) may additionally store the block data DB or a delta data DB.

The location decision module 211 may determines a location of a mobile device, and may update malware information stored in the mobile device with local malware information of a region including the location of the mobile device which is determined by the location decision module. According to an exemplary embodiment, the location decision module 211 may determine a location of a mobile device. If the location of the mobile device does not belong to a control region of the server 240, the update management module 213 may transmit an URL of a server which controls the current location of the mobile device to the mobile device.

According to an exemplary embodiment, the location decision module 211 may check whether there is change in a location decider of the mobile device by checking whether there is change in a checksum of a malware signature DB, an execution environment (OS), a location ID, a version ID, and/or a number of blocks, which are received from the mobile device.

The update management module 213 may update the malware signature DB 233 of the mobile device. For example, the update management module 213 generates 'malware component information' described above, and transmits the malware component information to the mobile device.

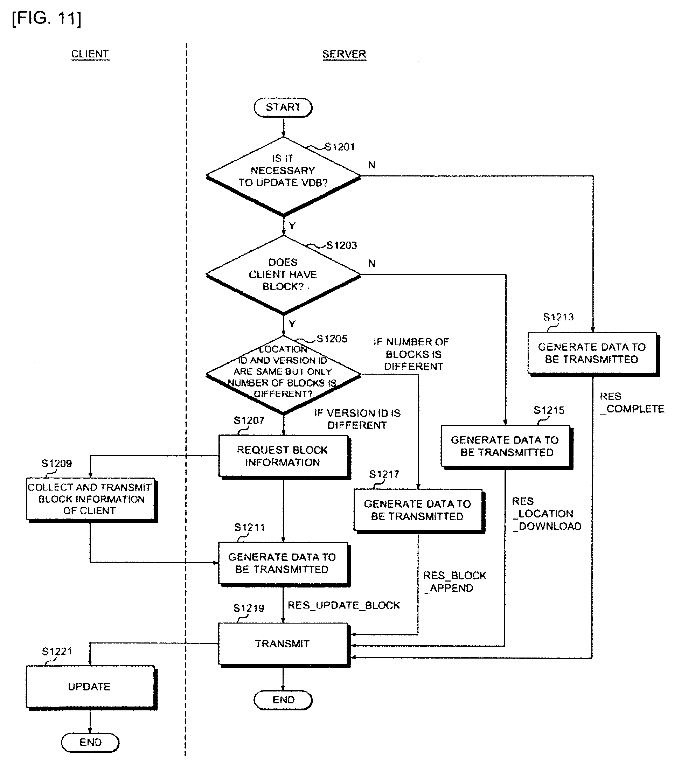

If an anti-malware engine of the mobile device is an old version, the update management module 213 may transmit a new anti-malware engine or data for updating the anti-malware engine to the mobile device. Also, the update management module 213 may transmit a local malware signature DB associated with a region to which the mobile device belongs to the mobile device. According to an exemplary embodiment, the process of updating the local malware signature DB by the update management module 213 will be explained in detail with reference to FIGS. 11 to 14.

Hereinafter, the server according to an exemplary embodiment will be explain detail with reference to FIGS. 3 to 8.

The virus pattern generation server 240 receives various types of malware patterns and classifies malware by the patterns, thereby generating the malware signature DB, and generates the block data DB according to a predetermined criterion. Specifically, referring to FIGS. 5 and 7, the virus pattern input process module 241 receives virus patterns of various forms (S501) and stores the virus patterns in a temporary storage unit (S503). The method for inputting the virus patterns may be inputting through a web or inputting through a file transfer protocol (FTP).

The virus patterns of the various forms stored in the temporary storage unit (not shown) may include a location code (loc_cd) indicating a country where a virus is generated, an OS code (os_cd) indicating an OS used by a device where a virus is generated, a file name including virus data, a checksum of virus data, and a generation date, as shown in FIG. 7.

The virus pattern input process module 241 scans the virus patterns of the various forms stored in the temporary storage unit (not shown) and checks essential information essentially owned by the virus patterns, and classifies the virus patterns having the essential information by the patterns, thereby generating the pattern data DB. The pattern data DB is illustrated on a lower box of FIG 7 by way of an example. The essential information that is essentially owned by the virus patterns may be a malware name, an offset, a target type, and a signature type. The pattern data DB may be stored in the storage unit or a storage unit separately provided.

Referring to FIG. 7, the pattern data DB may include a location code, an OS code, a block ID, virus data, a virus generation date, a version of a block ID, and a job type. The block ID may include the location code, the OS code, and a virus generation month. Accordingly, data having the same location code, OS code, and virus generation month have the same block ID.

Referring to FIG. 7, 'ADD' is displayed as a job type in the pattern data DB. The job type may further include REMOVE, REPLACE, and UPDATE. According to an exemplary embodiment, the mobile device receives the data shown in FIG. 7 and removes, replaces, or updates the malware signature DB stored in the mobile device.

Referring to FIGS. 6 and 7, a method for generating a block data DB will be explained. Referring to FIGS. 6 and 7, the block generation module reads out the pattern data DB (S601), extracts data to be divided into blocks (S603), and generates a block using the extracted data (S605). After that, a block data DB including the generated blocks is stored in a storage unit separately provided (S607). The block data DB may be stored in the storage unit.

Referring to FIG 7, the block data DB is illustrated by way of an example. The block generation module scans the pattern data DB and extracts data having the same block ID. It can be seen from FIG. 7 that data having data keys 1 to 4 have the same block ID. The virus data having the same block ID constitute a single block so that the block data DB is generated. Also, in FIG 7, two blocks have block ID 001002_002001_200902. In this case, the blocks are the same in the location code (loc-cd), the OS code (os_cd), and the generation month (month), but are different from each other in the generation date. In this case, the block generation module assigns a version of the block ID (block_ver) to distinguish between the blocks having the same block ID. In FIG 7, version 1 of the block ID includes virus data keys 1 to 4, and version 2 of the block ID includes virus data keys I to 9.

Although the criterion to classify the blocks is a month in the above exemplary embodiment of FIG. 7, the criterion may be a day.

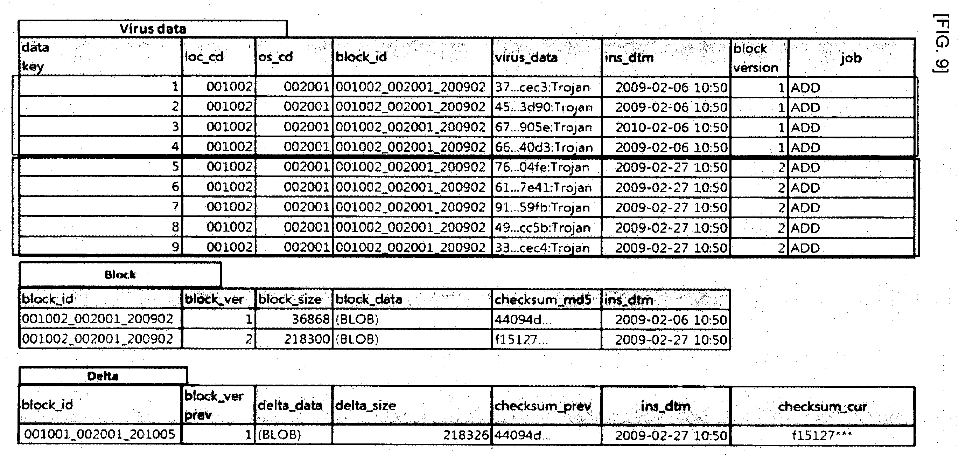

Hereinafter, a method for generating a delta data DB will be explained with reference to FIGS. 8 and 9. The block generation module 243 may generate a delta data DB after generating the block data DB. That is, the block generation module 243 reads out the block data DB (S801) and checks whether there are data that have the same block ID but have different versions of the block ID. If there are data that have different versions of the block ID (S803: Y), the block generation module 243 generates delta data (S805) and stores the delta data as a delta data DB (S807). The delta data DB may be stored in the storage unit or a storage unit separately provided. An example of the delta data DB is illustrated in FIG 9. The delta data DB is generated with the data having the same block ID but having different versions of the block ID, and includes a different between these blocks. That is, the delta data DB of FIG. 9 includes virus data of data keys 5 to 9.

In the above-described exemplary embodiment, the location decision module 211 determines the location of the mobile device and checks whether there is change in the location decider of the mobile device by checking whether there is change in the checksum of the malware signature DB, the execution environment (OS), the location ID, the version ID, and/or the number of blocks, which are received from the mobile device. However, the location decision module 211 may be configured differently. For example, the location decision module 211 may determine the location of the mobile device, whereas the update management module 213 may check whether there is change in the location decider of the mobile device by checking whether there is change in the checksum of the malware signature DB, the execution environment (OS), the location ID, the version ID, and/or the number of blocks, which are received from the mobile device.

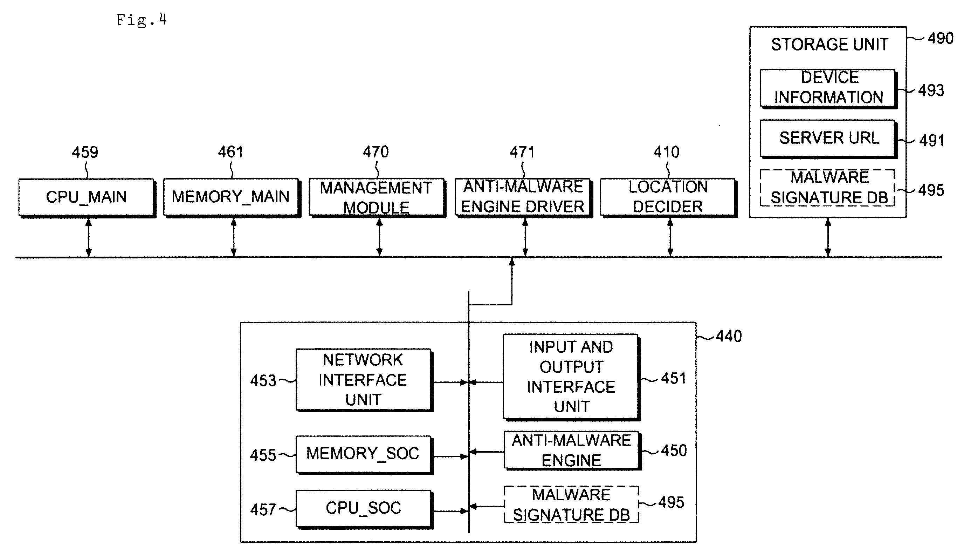

FIG 4 is a block diagram illustrating a mobile device according to an exemplary embodiment. In FIG 4, the mobile device according to an exemplary embodiment is configured in the form of a system on chip (SOC) by way of an example.

Referring to FIG 4, the mobile device according to an exemplary embodiment includes a SOC part (hereinafter, referred to as a 'SOC') 440 and main modules 459, 461, 470, 471, 410, 430, 493, 491, and 495.

According to an exemplary embodiment, the main modules and the SOC 400 may be mounted on a main board. The SOC 440 may be realized by a SOC for an intellectual property (IP) or a general SOC. In the present specification, the SOC encompasses the general SOC and the SOC for the IP unless there is a specific benefit to distinguish between the two SOCs.

The SOC 440 receives data (an execution file, a data file,..., all data) that is used or operated in the main modules from the main modules, and determines whether scanning data includes malware or not. To achieve this, the SOC 440 may include an anti-virus engine.

According to an exemplary embodiment, the SOC 440 compares signature data and scanning data, thereby determining whether the scanning data includes malware. The signature data may be stored in and managed by the main modules or the SOC 440. If the signature data is stored in the main modules, the SOC 440 receives the signature data from the main modules and performs a virus scanning operation.

The SOC 440 may include a network interface unit 453, a SOC memory (MEMORY_SOC) 455, a SOC CPU (CPU_SOC) 457, an input and output interface unit 451, and an anti-malware engine 450.

The network interface unit 453 may provide an interface through the mobile device communicates with an external network. Also, the network interface unit 453 may support communication with at least one of the first to the second servers shown in FIG 1.

In the present exemplary embodiment, all data exchanged with the mobile device through a network passes through the network interface unit 453, and the anti-malware engine 450 scans all of the data passing through the network interface unit 453. That is, the anti-malware engine 450 compares the data passing through the network interface unit 453 and the malware signature DB 495, thereby scanning the malware.

The input and output interface unit 451 may support communication between the SOC 440 and the main modules. In the present exemplary embodiment, malware scanning data is transmitted from the main modules to the SOC 440 through the input and output interface unit 451, and the anti-virus engine compares the data received through the input and output interface unit 451 and the malware signature DB 495, thereby scanning the malware.

The management module 470, the location decider 410, and the storage unit 490 may perform the same operations as the management module 170, the location decider 110, and the storage unit 190 of FIG 2.

The main modules may include a main CPU (CPU_MAIN), a main memory (MEMORY_MAIN), the management module 470, the anti-malware engine driver 471, the location decider 410, and the storage unit storing device information 493 and a server URL 491.

The main CPU (CPU_MAIN) and the main memory (MEMORY_MAIN) control an overall operation of the mobile device, and the anti-malware engine driver may transmit the scanning data to the SOC 440.

The management module 470 may transmit the scanning data to the SOC 440 through the anti-malware engine driver 471.

The malware signature DB 495 may be included in the SOC 440 or the main modules. Although the SOC includes its own SOC CPU 457 and its own SOC memory (MEMORY_SOC) in the present exemplary embodiment, this is merely an example and the SOC may not include the SOC CPU 457 and/or the SOC memory (MEMORY_SOC).

FIG 10 is a view to explain a method for providing an anti-malware service based on a server according to an exemplary embodiment.

Referring to FIGS. 1 and 10, the mobile device (that is, client) and the server may exchange an authentication key for the sake of safe communication therebetween (S 1102). However, this is an optional stage and may be applied if necessary.

The mobile device 100 collects information on the mobile device (S1103) and transmits the collected mobile device information (a checksum of a signature DB, an execution environment, a location ID, a version ID, and/or a number of blocks) to the server. The location decision module 211 of the server checks whether there is change in a location decider by checking whether there is change in the mobile device information, such as the checksum of the signature DB, the execution environment (OS), the location ID, the version ID, and/or the number of blocks (S1105).

For example, in operation S1105, the server determines whether there is change in the location decider by determining whether the location decider of the mobile device corresponds to the execution environment of the mobile device or not. If it is determined that there is change in the location decider (S1105: Y), the update management module 213 transmits a location decider appropriate for the execution environment of the mobile device to the mobile device (S1107) and the mobile device updates its own location decider with the received location decider (S1109). After that, the updated location decider is executed (S1111).

On the other hand, if it is determined that there is no change in the location decider (S1105:N), the update management module 213 determines whether it is necessary to update a virus DB (VDB) of the mobile device or not (S1113), and, if it is determined that it is necessary to update, the virus DB is updated (S1115). The virus DB may refer to a malware signature DB.

FIG 11 is a view to explain the method for providing the anti-malware service based on the server according to an exemplary embodiment, and in particular, to explain a process of updating the virus DB.

Referring to FIGS. 1 and 11, the update management module of the server 200a determines whether to update the virus DB by referring to the location ID, the version ID, and the number of blocks transmitted from the mobile device (S1201). For example, the update management module of the server 200a determines that it is not necessary to update the mobile device 200 if a location ID and a version ID of a malware signature DB stored in the server 200a and a number of blocks belonging to the location ID are consistent with the location ID, the version ID, and the number of blocks transmitted from the mobile device 200 (S1201: N). In this case, the server 200a generates a response (RES_COMPLETE) indicating that the 'malware signature DB of the mobile device 200 is complete' (S1213), and transmits the response to the mobile device (S1209).

On the other hand, in operation S1201, the update management module of the server 200a determines that it is necessary to update the virus database if at least one of the location ID, the version ID, and the number of blocks is not consistent (S1201: Y). If the number of blocks of the mobile device is "0", the update management module of the server 200a generates malware component information (RES_LOCATION_DOWNLOAD) to be transmitted to the client (S1215). The malware component information generated in operation S1215 includes all block data belonging to the location ID transmitted from the mobile device.

In operation S1203, if the number of blocks of the client is not "0" (S1203: Y), the update management module of the server 200a determines whether the location ID and the version ID are the same but the number of blocks is different (S1205). If it is determined that only the number of blocks is different in operation S1205, malware component information (RES_BLOCK_APPEND) including blocks that does not belong to the mobile device from among the blocks belonging to the location ID transmitted from the mobile device is generated (S1217).

In operation S1205, if the version ID is the same, the server requests block information from the mobile device (S1207). The mobile device collects its own block information (a block ID of the client, a version of the block ID, and a block checksum) and transmits the collected block information to the server (S1209), and the server generates malware component information to be transmitted to the client using the block information received from the mobile device (S1211). The malware component information generated in operation S1211 is information (RES_UPDATE_BLOCK) for correcting, deleting, replacing, or adding blocks stored by the client.

The mobile device receives the malware component information generated in operation S1213, S1215, S1217, or S1211, and performs an updating operation according to the received information (S1221).

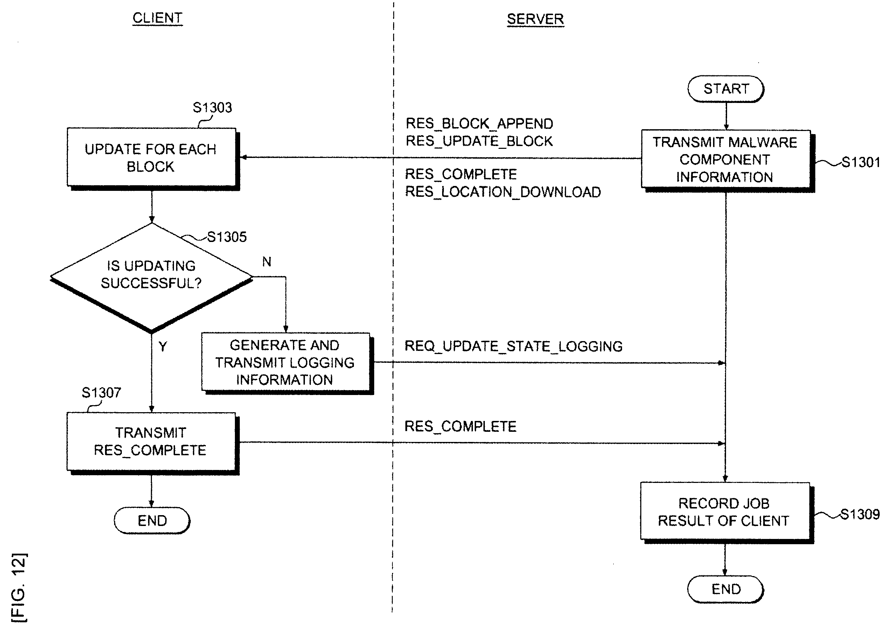

FIG. 12 is a view to explain the method for providing the anti-malware service based on the server according to an exemplary embodiment, and in particular, a process of updating by the mobile device.

Referring to FIGS. 1 and 12, the update management module of the server transmits the malware component information generated as shown in FIG. 11 to the mobile device (S1301). The malware component information may be one of RES_BLOCK_APPEND, RES_UPDATE_BLOCK, RES_COMPLETE, and RES_LOCATiON_DOWNLOAD.

The mobile device receives the malware component information described above from the server, and performs an updating operating on a block basis (S1303). For example, if RES_BLOCK_APPEND is received, the mobile device adds a block included in RES_BLOCK_APPENO to its own block data DB. If RES_UPDATE_BLOCK is received, the mobile device deletes, corrects, replaces or adds some of the block data stored by the mobile device using data included in RES_UPDATE_BLOCK. If RES_COMPLETE is received, the mobile device does not perform an extra operation, and, if RES_LOCATION_DOWNLOAD is received, the mobile device adds all of the blocks included in RES_LOCATION_DOWNLOAD to its own block ID.

If updating is successfully completed in operation S1303, RES_COMPLETE indicating that updating is completed is generated and transmitted to the server (S1307), and, if updating fails, logging information (REQ_UPDATE_STATE_LOGGING) is generated and transmitted to the server.

The server receives the response from the mobile device and records a job result (S1309).

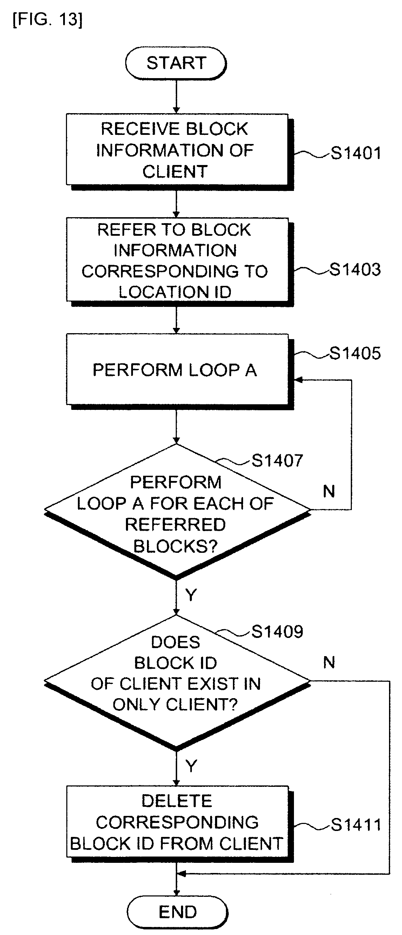

FIG. 13 is view to explain the method for providing the anti-malware service based on the server according to an exemplary embodiment, and in particular, to explain a method for generating the information RES_UPDATE_BLOCK by the server.

Referring to FIGS. 1 and 13, the update management module of the server 200a receives the block information from the mobile device (S1401). The block information includes a block ID, a version of the block ID, and a block checksum of the mobile device.

The server refers to block information corresponding to a location ID in the malware signature DB (or the block data DB) stored by the server using the pre-received location ID of the mobile device.

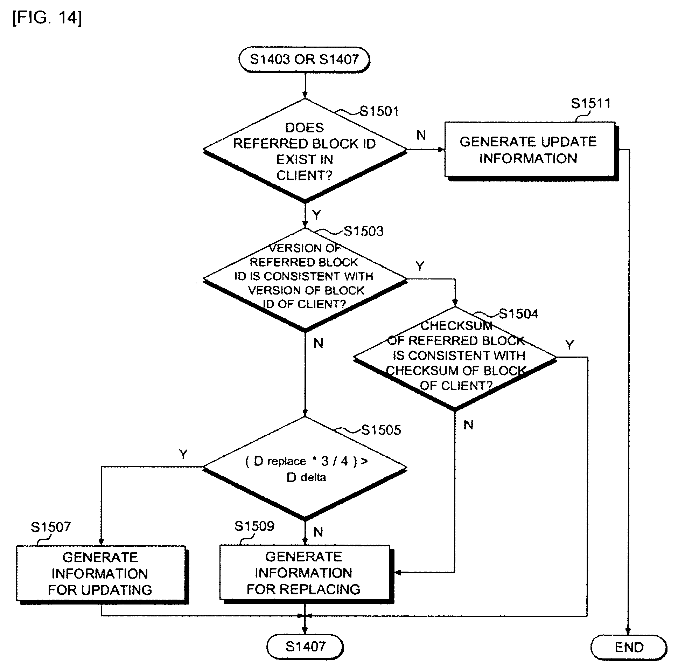

The server performs a loop A operation for every block corresponding to the location ID (S1405), and, if the loop A operation is completed for all of the blocks (S1407), the server determines whether the block ID of the mobile device exists in only the mobile device (S1409). The loop A operation will be explained below with reference to FIG. 14.

If the block ID of the mobile device exists in only the mobile device, malware component information for deleting the corresponding block ID from the mobile device is generated and transmitted to the mobile device. The mobile device deletes the corresponding block ID accordingly (S1411).

FIG 14 is a view to explain the method for providing the anti-malware service based on the server according to an exemplary embodiment, and in particular, to explain the loop A operation of FIG 13.

Referring to FIG. 1 and 14, the server determines whether a block ID included in the result of referring in operation S1403 of FIG 13 exists in the block ID of the mobile device. If not (S1501: N), the server generates update information for transmitting block data having the block ID included in the result of the referring to the mobile device (S1511). The update information may be transmitted to the mobile device for updating. If the block ID included in the result of the referring exists in the block ID of the mobile device in operation S1501, it is determined whether a version of the block ID included in the result of the referring is consistent with a version of the block ID received from the mobile device (S1503).

If the two versions are consistent with each other (S1503: Y), the server compares a checksum of the block included in the result of the referring and a checksum of the block received from the mobile device, thereby examining integrity (S1504). If the two checksums are consistent with each other (S1504: Y), operation S1407 of FIG. 13 is performed. If the two checksums are not consistent with each other (S1504: N), update information for replacing block data having the corresponding block ID is generated (S1509) and operation S 1407 of FIG. 13 is performed

In operation S1503, if the two versions are not consistent with each other (S1503: N), it is determined whether data of a block ID of a new version is to be transmitted or only delta data DB is to be transmitted (S1505). Operation S1505 may be determined by following equation:

[Equation 1]

$$D_{replace}*3/4 > D_{delta}$$

wherein $D_{replace}$ is an amount of data having a block ID of a new version, $D_{delta}$ is an amount of delta data, and * is multiplication.

The server compares the two amounts of data in operation S1505, and determines that updating is performed for a smaller amount of data. For example, if $(D_{replace}*3/4) > D_{delta}$, information for updating with the delta data DB is generated (S1507), and if not, information for replacing data with data of the block ID of the new version is generated (S1509), and the server performs operation S1407 again if operations S1507 and S1509 are completed.

In the above exemplary embodiment, the region controlled by the server is a country, but a region larger than or smaller than a country may be controlled by the server. For example, if the present invention is applied to a smart grid, a region controlled by the server is a specific region of a country (For example, Pusan).

The foregoing exemplary embodiments and advantages are merely exemplary and are not to be construed as limiting the present inventive concept. The exemplary embodiments can be readily applied to other types of apparatuses. Also, the description of the exemplary embodiments is intended to be illustrative, and not to limit the scope of the claims, and many alternatives, modifications, and variations will be apparent to those skilled in the art.

**Claims**

1. A method for providing an anti-malware service based on a server, the method comprising:

    managing, by at least one server, local malware information associated with a predetermined region;
    if a device is located in the region, generating, by the server, malware component information for the device based on the local malware information; and
    transmitting, by the server, the malware component information to the device.

2. The method as claimed in claim 1, wherein the local malware information comprises at least one of a local anti-malware engine associated with the predetermined region and a local malware signature DB associated with the predetermined region.

3. The method as claimed in claim 2, wherein the malware component information is information for updating malware information pre-stored in the device with the local malware information.

4. The method as claimed in claim 2, wherein the server generates a block data DB by extracting blocks from the local malware signature DB according to a predetermined criterion, and a block ID is assigned to each of the blocks of the block data DB.

5. The method as claimed in claim 4, wherein, if two blocks have a same block ID, the server assigns versions to the block ID and manages the versions, and generates a delta data DB comprising a difference between the blocks having the same block ID.

6. The method as claimed in claim 4, wherein the device comprises a location decider, and transmits at least one piece of information from among a checksum of a malware signature DB stored in the device, an execution environment of the device, a location ID, a version ID, and a number of blocks to the server, and the server which has received the information determines whether to transmit a new location decider to the device based on whether there is change in the information.

7. The method as claimed in claim 6, wherein the server checks whether the device has a block or not, and, if the device does not have a block, the server generates the malware component information so that the block data DB is included in the malware component information.

8. The method as claimed in claim 1, wherein the device is a mobile device.

9. A device comprising:

   a storage unit which stores a malware signature DB;
   an anti-malware engine; and
   a management module which requests malware component information associated with a region where the device is located from a server,
   wherein the management module receives the malware component information from the server, and updates at least one of the malware signature DB and the anti-malware engine using the malware component information.

10. The device as claimed in claim 9, further comprising a location decider,
    wherein the location decider activates a malware signature DB associated with a region where the device is currently located from among the malware signature DB stored in the storage unit.

11. The device as claimed in claim 10, wherein the management module transmits at least one piece of information from among a checksum of the malware signature DB, an execution environment of the device, a location ID, a version ID, and a number of blocks, when requesting the malware component information from the server.

12. The device as claimed in claim 9, wherein the malware signature DB is a block data DB in which data is classified on a block basis according to a predetermined criterion, and a block ID is assigned to each of blocks of the block data DB.

13. The device as claimed in claim 10 wherein, if the device receives a new location decider from the server, the management module replaces the existing location decider with the received location decider.

14. A server which provides an anti-malware service, comprising:

    a database server which stores local malware information associated with a predetermined region; and
    an update server which, if malware component information is requested by a device, determines a location of the device, and, if the location of the device is in the predetermined region, generates the malware component information based on the local malware information and transmits the malware component information to the device.

15. The server as claimed in claim 14, wherein the local malware information comprises at least one of a local anti-malware engine associated with the predetermined region and a local malware signature DB associated with the predetermined region.

16. The server as claimed in claim 15, wherein the malware component information is information for updating malware information pre-stored by the device with the local malware information.

17. The server as claimed in claim 15, further comprising a block generation module which generates a block data DB by extracting blocks from the local malware signature DB according to a predetermined criterion, wherein the block generation module assigns a block ID to each of the blocks of the block data DB.

18. The server as claimed in claim 17, wherein, if two blocks has a same block ID, the block generation module assigns versions to the block ID and manages the versions, and generates a delta data DB comprising a difference between the blocks having the same block ID.

19. The server as claimed in claim 14, wherein the database server stores a location decider corresponding to an execution environment of the device.

20. The server as claimed in claim 19, wherein the update server receives at least one piece of information from among a checksum of a malware signature DB, an execution environment of the device, a location ID, a version ID, and a number of blocks from the device, and determines whether to update the malware signature DB based on the received information.

**Patentansprüche**

1. Verfahren zur Bereitstellung eines Anti-Schadprogramm-Dienstes auf der Grundlage eines Dienstleisters, wobei das Verfahren umfasst:

   Verwalten von lokaler Schadprogramm-Information, die mit einem vorbestimmten Gebiet im Zusammenhang steht, durch mindestens einen Dienstleister;
   wenn ein Gerät in dem Gebiet angeordnet ist, Erzeugen einer Schadprogramm-Komponenteninformation für das Gerät auf der Grundlage der lokalen Schadprogramm-Information durch den Dienstleister; und
Übertragen der Schadprogramm-Komponenteninformation an das Gerät durch den Dienstleister.

2. Verfahren nach Anspruch 1, wobei die lokale Schadprogramm-Information eine lokale Anti-Schadprogramm-Funktionseinheit, die dem vorbestimmten Gebiet zugeordnet ist, und/oder eine lokale Schadprogramm-Signatur-DB, die dem vorbestimmten Gebiet zugeordnet ist, umfasst.

3. Verfahren nach Anspruch 2, wobei die Schadprogramm-Komponenteninformation eine Information zur Aktualisierung einer in dem Gerät im Voraus gespeicherten Schadprogramm-Information mittels der lokalen Schadprogramm-Information ist.

4. Verfahren nach Anspruch 2, wobei der Dienstleister eine Blockdaten-DB erzeugt, indem Blöcke aus der lokalen Schadprogramm-Signatur-DB entsprechend einem vorbestimmten Kriterium extrahiert werden, und jedem der Blöcke der Blockdaten-DB eine Block-Kennung zugewiesen wird.

5. Verfahren nach Anspruch 4, wobei, wenn zwei Blöcke eine gleiche Block-Kennung haben, der Dienstleister Versionen zu der Block-Kennung zuordnet und die Versionen verwaltet, und eine Differenzdaten-DB erzeugt, die einen Unterschied zwischen den Blöcken mit der gleichen Block-Kennung umfasst.

6. Verfahren nach Anspruch 4, wobei das Gerät eine Positionsentscheidungseinheit umfasst und mindestens eine Information aus einer Prüfsumme einer Schadprogramm-Signatur-DB, die in dem Gerät gespeichert ist, und/oder einer Ausführungsumgebung des Geräts und/oder einer Orts-Kennung und/oder einer Versions-Kennung und/oder einer Anzahl an Blöcken zu dem Dienstleister überträgt, und der Dienstleister, der die Information empfangen hat, ermittelt, ob eine neue Positionsentscheidungseinheit an das Gerät auf der Grundlage davon zu übertragen ist, ob es eine Änderung in der Information gibt.

7. Verfahren nach Anspruch 6, wobei der Dienstleister prüft, ob das Gerät einen Block hat oder nicht, und wenn das Gerät keinen Block hat, der Dienstleister die Schadprogramm-Komponenteninformation so erzeugt, dass die Blockdaten-DB in der Schadprogramm-Komponenteninformation enthalten ist.

8. Verfahren nach Anspruch 1, wobei das Gerät ein Mobilgerät ist.

9. Gerät mit:

einer Speichereinheit, die eine Schadprogramm-Signatur-DB speichert;
einer Anti-Schadprogramm-Funktionseinheit; und
einem Verwaltungsmodul, das Schadprogramm-Komponenteninformation, die mit einem Gebiet im Zusammenhang steht, in dem das Gerät angeordnet ist, von einem Dienstleister anfordert,
wobei das Verwaltungsmodul die Schadprogramm-Komponenteninformation von dem Dienstleister erhält und die Schadprogramm-Signatur-DB und/oder die Anti-Schadprogramm-Funktionseinheit unter Anwendung der Schadprogramm-Komponenteninformation aktualisiert.

10. Gerät nach Anspruch 9, das ferner eine Positionsentscheidungseinheit aufweist,
wobei die Positionsentscheidungseinheit in der in der Speichereinheit gespeicherten Schadprogramm-Signatur-DB eine Schadprogramm-Signatur-DB aktiviert, die mit einem Gebiet im Zusammenhang steht, in welchem das Gerät aktuell angeordnet ist.

11. Gerät nach Anspruch 10, wobei das Verwaltungsmodul eine Information aus einer Prüfsumme der Schadprogramm-Signatur-DB und/oder einer Ausführungsumgebung des Geräts und/oder einer Positions-Kennung und/oder einer Versions-Kennung und/oder einer Anzahl an Blöcken übermittelt, wenn die Schadprogramm-Komponenteninformation aus dem Dienstleister angefordert wird.

12. Gerät nach Anspruch 9, wobei die Schadprogramm-Signatur-DB eine Blockdaten-DB ist, in der Daten auf Basis von Blöcken entsprechend einem vorbestimmten Kriterium klassifiziert sind, und jedem der Blöcke der Blockdaten-DB eine Block-Kennung zugeordnet ist.

13. Gerät nach Anspruch 10, wobei, wenn das Gerät eine neue Positionsentscheidungseinheit aus dem Dienstleister empfängt, das Verarbeitungsmodul die bestehende Positionsentscheidungseinheit durch die empfangene Positionsentscheidungseinheit ersetzt.

14. Dienstleister, der einen Anti-Schadprogramm-Dienst bereitstellt, mit:

einem Datenbank-Dienstleister, der lokale Schadprogramm-Information, die mit einem vorbestimmten Gebiet im Zusammenhang steht, speichert; und
einem Aktualisierungs-Dienstleister, der, wenn eine Schadprogramm-Komponenteninformation von einem Gerät angefordert wird, eine Position des Geräts ermittelt, und, wenn die Position des Geräts in dem vorbestimmten Gebiet liegt, die Schadprogramm-Komponenteninformation auf der Grundlage der lokalen Schadprogramm-Information erzeugt und die Schadprogramm-Komponenteninformation an das Gerät übermittelt.

15. Dienstleister nach Anspruch 14, wobei die lokale Schadprogramm-Information eine lokale Anti-Schadprogramm-Funktionseinheit, die dem vorbestimmten Gebiet zugeordnet ist, und/oder eine lokale Schadprogramm-Signatur-DB, die dem vorbestimmten Gebiet zugeordnet ist, umfasst.

16. Dienstleister nach Anspruch 15, wobei die Schadprogramm-Komponenteninformation eine Information zur Aktualisierung der Schadprogramm-Information, die in dem Gerät im Voraus gespeichert ist, mittels der lokalen Schadprogramm-Information ist.

17. Dienstleister nach Anspruch 15, der ferner ein Blockerzeugungsmodul aufweist, das eine Blockdaten-DB erzeugt, indem Blöcke aus der lokalen Schadprogramm-Signatur-DB entsprechend einem vorbestimmten Kriterium extrahiert werden, wobei das Blockerzeugungsmodul jedem der Blöcke der Blockdaten-DB eine Block-Kennung zuweist.

18. Dienstleister nach Anspruch 17, wobei, wenn zwei Blöcke eine gleiche Block-Kennung haben, das Blockerzeugungsmodul Versionen zu der Block-Kennung zuweist und die Versionen verwaltet, und eine Differenzdaten-DB erzeugt, die einen Unterschied zwischen den Blöcken mit der gleichen Block-Kennung enthält.

19. Dienstleister nach Anspruch 14, wobei der Datenbank-Dienstleister eine Positionsentscheidungseinheit, die einer Ausführungsumgebung des Geräts entspricht, speichert.

20. Dienstleister nach Anspruch 19, wobei der Aktualisierungs-Dienstleister eine Information aus einer Prüfsumme einer Schadprogramm-Signatur-DB und/oder einer Ausführungsumgebung des Geräts und/oder einer Positions-Kennung und/oder einer Versions-Kennung und/oder einer Anzahl von Blöcken von dem Gerät empfängt, und auf der Grundlage der empfangenen Information ermittelt, ob die Schadprogramm-Signatur-DB zu aktualisieren ist.

**Revendications**

1. Procédé de fourniture d'un service anti logiciel malveillant fondé sur un serveur, le procédé comprenant :

la gestion, par au moins un serveur, d'informations locales sur un logiciel malveillant associées à une zone prédéterminée,
la génération, par le serveur, si un dispositif est situé dans la zone, d'informations sur les composantes du logiciel malveillant pour le dispositif sur la base des informations locales sur le logiciel malveillant, et
la transmission au dispositif, par le serveur, des informations sur les composantes du logiciel malveillant.

2. Procédé selon la revendication 1, dans lequel les informations locales sur le logiciel malveillant comprennent au moins l'un d'un moteur local anti logiciel malveillant associé à la zone prédéterminée ainsi qu'une base de données DB de signatures locales de logiciels malveillants associée à la zone prédéterminée.

3. Procédé selon la revendication 2, dans lequel les informations sur les composantes du logiciel malveillant sont des informations permettant de mettre à jour des informations sur le logiciel malveillant mémorisées à l'avance dans le dispositif comportant les informations locales sur le logiciel malveillant.

4. Procédé selon la revendication 2, dans lequel le serveur génère une base de données constituée de données en blocs en extrayant des blocs de la base de données de signatures locales de logiciels malveillants en fonction d'un critère prédéterminé, et un identifiant ID de bloc est assigné à chacun des blocs de la base de données constituée de données en blocs.

5. Procédé selon la revendication 4, dans lequel, si deux blocs présentent un même identifiant de bloc, le serveur assigne des versions à l'identifiant de bloc et gère les versions, et il génère une base de données DB constituée de données d'écart comprenant la différence existant entre les blocs présentant le même identifiant de bloc.

6. Procédé selon la revendication 4, dans lequel le dispositif comprend un décideur d'emplacement, et transmet au serveur au moins un élément d'information pris parmi une somme de contrôle d'une base de données de signatures de logiciels malveillants stockée dans le dispositif, un environnement d'exécution du dispositif, un identifiant d'emplacement, un identifiant de version et un nombre de blocs, et le serveur qui a reçu les informations détermine s'il faut transmettre un nouveau décideur d'emplacement au dispositif sur la base du fait qu'il y a un changement d'informations.

7. Procédé selon la revendication 6, dans lequel le serveur contrôle si le dispositif comporte un bloc ou pas, et si le dispositif n'a pas de bloc, le serveur génère des informations sur les composantes du logiciel malveillant de telle sorte que la base de données constituée de données en blocs soit incluse dans les informations sur les composantes du logiciel malveillant.

8. Procédé selon la revendication 1, dans lequel le dispositif est un dispositif mobile.

9. Dispositif comprenant :

    une unité de stockage qui stocke une base de données de signatures de logiciels malveillants, un moteur anti logiciel malveillant, et un module de gestion qui demande à un serveur des informations sur les composantes du logiciel malveillant associées à une zone où est situé le dispositif, dans lequel le module de gestion reçoit du serveur les informations sur les composantes du logiciel malveillant et met à jour au moins l'un de la base de données de signatures de logiciels malveillants et du moteur anti logiciel malveillant en utilisant les informations sur les composantes du logiciel malveillant.

10. Dispositif selon la revendication 9, comprenant en outre un décideur d'emplacement, dans lequel le décideur d'emplacement active une base de données de signatures de logiciels malveillants associée à la zone où est actuellement situé le dispositif parmi les base de données de signatures de logiciels malveillants stockées dans l'unité de stockage.

11. Dispositif selon la revendication 10, dans lequel le module de gestion transmet au moins un élément d'information pris parmi une somme de contrôle de la base de données de signatures de logiciels malveillants, un environnement d'exécution du dispositif, un identifiant d'emplacement, un identifiant de version et un nombre de blocs lorsqu'il demande au serveur les informations sur les composantes du logiciel malveillant.

12. Dispositif selon la revendication 9, dans lequel la base de données de signatures de logiciels malveillants est une base de données constituée de données en blocs dans laquelle des données sont classées sur la base de blocs en fonction d'un critère prédéterminé, et où un identifiant de bloc est assigné à chacun des blocs de la base de données constituée de données en blocs.

13. Dispositif selon la revendication 10, dans lequel, si le dispositif reçoit du serveur un nouveau décideur d'emplacement, le module de gestion remplace le décideur d'emplacement existant avec le décideur d'emplacement reçu.

14. Serveur fournissant un service anti logiciel malveillant, comprenant :

    un serveur de bases de données qui stocke des informations locales sur des logiciels malveillants associées à une zone prédéterminée, et un serveur de mise à jour qui détermine l'emplacement du dispositif si les informations sur les composantes du logiciel malveillant sont demandées par un dispositif et qui génère, si l'emplacement du dispositif se trouve dans la zone prédéterminée, les informations sur les composantes du logiciel malveillant sur la base des informations locales sur le logiciel malveillant, et transmet les informations sur les composantes du logiciel malveillant au dispositif.

15. Serveur selon la revendication 14, dans lequel les informations locales sur le logiciel malveillant comprennent au moins l'un d'un moteur local anti logiciel malveillant associé à la zone prédéterminée et d'une base de données locale de signatures de logiciels malveillants associée à la zone prédéterminée.

16. Serveur selon la revendication 15, dans lequel les informations sur les composantes du logiciel malveillant sont des informations permettant de mettre à jour les informations sur le logiciel malveillant mémorisées à l'avance par le dispositif avec les informations locales sur le logiciel malveillant.

17. Serveur selon la revendication 15, comprenant en outre un module de génération de blocs qui génère une base de données constituée de données en blocs en extrayant des blocs de la base de données locale de signatures de logiciels malveillants en fonction d'un critère prédéterminé, dans lequel le module de génération de blocs assigne un identifiant de bloc à chacun des blocs de la base de données constituée de données en blocs.

18. Serveur selon la revendication 17, dans lequel, si deux blocs présentent un même identifiant de bloc, le module de génération de blocs assigne des versions à l'identifiant de bloc et gère les versions, et il génère une base de données constituée de données d'écart comprenant la différence existant entre les blocs présentant le même identifiant de bloc.

19. Serveur selon la revendication 14, dans lequel le serveur de bases de données stocke un décideur d'emplacement correspondant à un environnement d'exécution du dispositif.

**20.** Serveur selon la revendication 19, dans lequel le serveur de mises à jour reçoit du serveur au moins un élément d'information pris parmi une somme de contrôle d'une base de données de signatures de logiciels malveillants, un environnement d'exécution du dispositif, un identifiant d'emplacement, un identifiant de version et un nombre de blocs, et détermine s'il faut mettre à jour la base de données de signatures de logiciels malveillants sur la base des informations reçues.

[FIG. 1]

[FIG. 2]

[FIG. 3]

VIRUS PATTERN GENERATION SERVER — 240

VIRUS PATTERN INPUT PROCESS MODULE — 241

BLOCK GENERATION MODULE — 243

UPDATE SERVER — 210

LOCATION DECISION MODULE — 211

UPDATE MANAGEMENT MODULE — 213

DATABASE SERVER — 230

LOG — 231

MALWARE SIGNATURE DB — 233

DATA FOR UPDATING ANTI-MALWARE ENGINE — 235

Fig. 4

[FIG. 5]

```
                    ( START )
                        |
                        v
            +-----------------------+
            |   RECEIVE VIRUS       |
            |   PATTERNS OF         |---- S501
            |   VARIOUS FORMS       |
            +-----------------------+
                        |
                        v
            +-----------------------+
            | STORE VIRUS PATTERNS  |
            |   IN TEMPORARY        |---- S503
            |   STORAGE UNIT        |
            +-----------------------+
                        |
                        v  <---------------------+
            +-----------------------+            |
            | SCAN DATA STORED IN   |            |
            | TEMPORARY STORAGE     |---- S505    |
            |        UNIT           |            |
            +-----------------------+            |
                        |                        |
                        v       S507             |
                    /-----------\                |
                   /  DOES VIRUS  \              |
                  /  PATTERN HAVE   \    N        |
                 <   ESSENTIAL       >-----------+
                  \  INFORMATION?   /
                   \               /
                    \-----------/
                        | Y
                        v
            +-----------------------+
            |  GENERATE PATTERN     |
            |  DATA DB IN WHICH     |
            |  VIRUS PATTERNS ARE   |---- S509
            |  CLASSIFIED BY        |
            |  PATTERNS             |
            +-----------------------+
                        |
                        v
                    (  END  )
```

[FIG. 6]

```
         ┌──────────┐
         │  START   │
         └────┬─────┘
              │
              ▼
    ┌──────────────────┐
    │ READ OUT PATTERN │ ─── S601
    │    DATA DB       │
    └────────┬─────────┘
             │
             ▼
    ┌──────────────────┐
    │ EXTRACT DATA TO BE│ ─── S603
    │ DIVIDED INTO BLOCKS│
    └────────┬─────────┘
             │
             ▼
    ┌──────────────────┐
    │  GENERATE BLOCK  │ ─── S605
    └────────┬─────────┘
             │
             ▼
    ┌──────────────────┐
    │STORE BLOCK DATA DB│ ─── S607
    └────────┬─────────┘
             │
             ▼
         ┌──────────┐
         │   END    │
         └──────────┘
```

[FIG. 7]

EP 2 490 370 B1

**Database Temp**

| file key | loc_cd | os_cd | file_name | checksum | ins_dtm |
|---|---|---|---|---|---|
| 1 | C01002 | 002001 | 100205104935.mdb | 5cd7981 | 2010-02-05 10:49 |
| 2 | C01002 | 002002 | 100205105942.mdb | 09b8d5c | 2010-02-05 10:59 |
| 3 | C01002 | 002002 | 100205110101.ndb | d780379 | 2010-02-05 11:01 |
| 4 | C01001 | 002001 | 100217140934.ndb | c30f1fc6 | 2010-02-17 14:09 |
| 5 | C01002 | 002002 | 100514163852.ndb | f4e2546 | 2010-05-14 16:38 |

**Virus data**

| data key | loc_cd | os_cd | block_id | virus_data | ins_dtm | block version | job |
|---|---|---|---|---|---|---|---|
| 1 | C01002 | 002001 | 001002_002001_201002 | 97...cec3:Trojan | 2010-02-05 10:50 | 1 | ADD |
| 2 | C01002 | 002001 | 001002_002001_201002 | 20...3d90:Trojan | 2010-02-05 10:50 | 1 | ADD |
| 3 | C01002 | 002001 | 001002_002001_201002 | 19...905e:Trojan | 2010-02-05 10:50 | 1 | ADD |
| 4 | C01002 | 002001 | 001002_002001_201002 | 11...40d3:Trojan | 2010-02-05 10:50 | 1 | ADD |
| 5 | C01002 | 002001 | 001002_002001_201002 | 29...04fe:Trojan | 2010-02-05 10:50 | 1 | ADD |
| 6 | C01002 | 002001 | 001002_002001_201002 | 16...7e41:Trojan | 2010-02-05 10:50 | 1 | ADD |
| 7 | C01002 | 002001 | 001002_002001_201002 | 19...59fb:Trojan | 2010-02-05 10:50 | 1 | ADD |
| 8 | C01002 | 002001 | 001002_002001_201002 | 94...cc5b:Trojan | 2010-02-05 10:50 | 1 | ADD |
| 9 | C01002 | 002001 | 001002_002001_201002 | 20...cec4:Trojan | 2010-02-05 10:50 | 1 | ADD |

[FIG. 8]

```
                    ┌──────────┐
                    │  START   │
                    └────┬─────┘
                         │
              ┌──────────▼──────────┐
              │    READ OUT BLOCK   │── S801
              │      DATA DB        │
              └──────────┬──────────┘
                         │
                     ╱───▼───╲
                    ╱   ARE   ╲── S803
                   ╱ THERE DATA ╲
                  ╱ HAVING DIFFERENT ╲──── N ──┐
                  ╲   BLOCK ID   ╱            │
                   ╲  VERSIONS? ╱             │
                    ╲─────┬────╱              │
                          │ Y                 │
              ┌───────────▼──────────┐        │
              │  GENERATE DELTA      │── S805  │
              │      DATA            │        │
              └───────────┬──────────┘        │
                          │                   │
              ┌───────────▼──────────┐        │
              │ STORE DELTA DATA DB  │── S807  │
              └───────────┬──────────┘        │
                          │◄──────────────────┘
                    ┌─────▼─────┐
                    │    END    │
                    └───────────┘
```

[FIG. 9]

**Virus data**

| data key | loc_cd | os_cd | block_id | virus_data | ins_dtm | block version | job |
|---|---|---|---|---|---|---|---|
| 1 | 001002 | 002001 | 001002_002001_200902 | 37...cec3:Trojan | 2009-02-06 10:50 | 1 | ADD |
| 2 | 001002 | 002001 | 001002_002001_200902 | 45...3d90:Trojan | 2009-02-06 10:50 | 1 | ADD |
| 3 | 001002 | 002001 | 001002_002001_200902 | 67...905e:Trojan | 2010-02-06 10:50 | 1 | ADD |
| 4 | 001002 | 002001 | 001002_002001_200902 | 66...40d3:Trojan | 2009-02-06 10:50 | 1 | ADD |
| 5 | 001002 | 002001 | 001002_002001_200902 | 76...04fe:Trojan | 2009-02-27 10:50 | 2 | ADD |
| 6 | 001002 | 002001 | 001002_002001_200902 | 61...7e41:Trojan | 2009-02-27 10:50 | 2 | ADD |
| 7 | 001002 | 002001 | 001002_002001_200902 | 91...59fb:Trojan | 2009-02-27 10:50 | 2 | ADD |
| 8 | 001002 | 002001 | 001002_002001_200902 | 49...cc5b:Trojan | 2009-02-27 10:50 | 2 | ADD |
| 9 | 001002 | 002001 | 001002_002001_200902 | 33...cec4:Trojan | 2009-02-27 10:50 | 2 | ADD |

**Block**

| block_id | block_ver | block_size | block_data | checksum_md5 | ins_dtm |
|---|---|---|---|---|---|
| 001002_002001_200902 | 1 | 36868 | (BLOB) | 44094d... | 2009-02-06 10:50 |
| 001002_002001_200902 | 2 | 218300 | (BLOB) | f15127... | 2009-02-27 10:50 |

**Delta**

| block_id | block_ver prev | delta_data | delta_size | checksum_prev | ins_dtm | checksum_cur |
|---|---|---|---|---|---|---|
| 001001_002001_201005 | 1 | (BLOB) | 218326 | 44094d... | 2009-02-27 10:50 | f15127*** |

[FIG. 10]

CLIENT                                    SERVER

( START )                               ( START )

┌ ─ ─ ─ ─ ─ ─ ─ ─ ─ ┐  S1102        ┌ ─ ─ ─ ─ ─ ─ ─ ─ ─ ┐  S1102
│     EXCHANGE       │  ◄ ─ ─ ─ ─ ─ ─ ─ ─ ─ ─ ─ ─ ─ ►  │     EXCHANGE       │
│  AUTHENTICATION    │                │  AUTHENTICATION    │
│       KEY          │                │       KEY          │
└ ─ ─ ─ ─ ─ ─ ─ ─ ─ ┘                └ ─ ─ ─ ─ ─ ─ ─ ─ ─ ┘

S1103
┌────────────────────┐   SIGNATURE DB CHECKSUM
│  COLLECT CLIENT    │   CLIENT EXECUTION ENVIRONMENT
│   INFORMATION      │   location ID, version ID
└────────────────────┘   NUMBER OF BLOCKS

                                        ╱╲  S1105
                              Y        ╱    ╲
                        ◄─────────────╱ IS THERE ╲
                                      ╲ CHANGE IN LOCATION ╱
                                      ╲ DECIDER? ╱
                                        ╲    ╱
                                         ╲╱
                                          │ N

                        S1107
          ┌────────────────────┐
          │ TRANSMIT LOCATION  │
          │ DECIDER APPROPRIATE│
          │ FOR EXECUTION      │
          │ ENVIRONMENT OF     │
          │ CLIENT             │
          └────────────────────┘

S1109
┌────────────────────┐
│  UPDATE LOCATION   │
│     DECIDER        │
└────────────────────┘

S1111
┌────────────────────┐
│  EXECUTE LOCATION  │
│     DECIDER        │
└────────────────────┘

                                         ╱╲  S1113
                                        ╱    ╲              N
                                       ╱ IS IT NECESSARY ╲ ─────┐
                                       ╲ TO UPDATE VDB? ╱       │
                                        ╲    ╱                  │
                                         ╲╱                     │
                                          │ Y   S1115           │
                                ┌────────────────────┐          │
                                │    UPDATE VDB      │          │
                                └────────────────────┘          │
                                          │                     │
                                          └─────────────────────┤
                                                                │
                                                            ( END )

24

[FIG. 11]

CLIENT | SERVER

START

S1201
IS IT NECESSARY TO UPDATE VDB?

N →

Y

S1203
DOES CLIENT HAVE BLOCK?

N →

Y

S1205
LOCATION ID AND VERSION ID ARE SAME BUT ONLY NUMBER OF BLOCKS IS DIFFERENT?

IF NUMBER OF BLOCKS IS DIFFERENT

S1213
GENERATE DATA TO BE TRANSMITTED

RES _COMPLETE

S1207
REQUEST BLOCK INFORMATION

IF VERSION ID IS DIFFERENT

S1215
GENERATE DATA TO BE TRANSMITTED

S1209
COLLECT AND TRANSMIT BLOCK INFORMATION OF CLIENT

S1217
GENERATE DATA TO BE TRANSMITTED

RES _LOCATION _DOWNLOAD

S1211
GENERATE DATA TO BE TRANSMITTED

S1219
TRANSMIT

RES_UPDATE_BLOCK

RES_BLOCK _APPEND

S1221
UPDATE

END

END

END

25

EP 2 490 370 B1

[FIG. 12]

CLIENT

UPDATE FOR EACH BLOCK — S1303

IS UPDATING SUCCESSFUL? — S1305

TRANSMIT RES_COMPLETE — S1307

END

GENERATE AND TRANSMIT LOGGING INFORMATION

SERVER

START

TRANSMIT MALWARE COMPONENT INFORMATION — S1301

RECORD JOB RESULT OF CLIENT — S1309

END

RES_BLOCK_APPEND
RES_UPDATE_BLOCK
RES_COMPLETE
RES_LOCATION_DOWNLOAD

REQ_UPDATE_STATE_LOGGING

RES_COMPLETE

[FIG. 13]

```
                    ┌─────────────┐
                    │    START    │
                    └──────┬──────┘
                           │
                           ▼
              ┌─────────────────────────┐
              │    RECEIVE BLOCK         │
              │    INFORMATION OF        │──── S1401
              │       CLIENT             │
              └────────────┬────────────┘
                           │
                           ▼
              ┌─────────────────────────┐
              │    REFER TO BLOCK        │
              │    INFORMATION           │
              │    CORRESPONDING TO      │──── S1403
              │     LOCATION ID          │
              └────────────┬────────────┘
                           │
                           ▼
              ┌─────────────────────────┐
              │                         │──── S1405
              │    PERFORM LOOP A        │◄──────┐
              │                         │       │
              └────────────┬────────────┘       │
                           │                    │
                           ▼         S1407       │
                    ╱────────────╲              │
                   ╱   PERFORM     ╲      N      │
                  ╱ LOOP A FOR EACH OF╲──────────┘
                  ╲    REFERRED      ╱
                   ╲    BLOCKS?     ╱
                    ╲────────────╱
                           │ Y
                           ▼         S1409
                    ╱────────────╲
                   ╱    DOES       ╲     N
                  ╱   BLOCK ID      ╲────────┐
                  ╲ OF CLIENT EXIST IN╱      │
                   ╲  ONLY CLIENT?  ╱        │
                    ╲────────────╱           │
                           │ Y               │
                           ▼                 │
              ┌─────────────────────────┐    │
              │    DELETE                │    │
              │    CORRESPONDING         │──── S1411
              │  BLOCK ID FROM CLIENT    │    │
              └────────────┬────────────┘    │
                           │◄────────────────┘
                           ▼
                    ┌─────────────┐
                    │     END     │
                    └─────────────┘
```

[FIG. 14]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 2010006988 W
- KR 20090096661

- KR 20090102566